# EUROPEAN PATENT SPECIFICATION

(11) **EP 2 667 674 B1**
(45) Date of publication and mention of the grant of the patent: **15.04.2015**
(21) Application number: 12737184.7
(22) Date of filing: 09.01.2012
(51) Int. Cl.: H04W 72/04, H04W 74/02, H04W 72/12

(54) **METHOD, USER EQUIPMENT AND COMMUNICATION SYSTEM FOR PROCESSING RESOURCE REQUESTS**
VERFAHREN, BENUTZERVORRICHTUNG UND KOMMUNIKATIONSSYSTEM ZUR BEARBEITUNG VON RESSOURCENANFRAGEN
PROCÉDÉ, ÉQUIPEMENT UTILISATEUR ET SYSTÈME DE COMMUNICATION POUR TRAITEMENT DE REQUÊTES DE RESSOURCES

(30) Priority: 20.01.2011 CN 201110023388
(43) Date of publication of application: 27.11.2013
(73) Proprietor: Huawei Technologies Co., Ltd., Longgang District Shenzhen, Guangdong 518129 (CN)
(72) Inventor: HAN, Guanglin, Shenzhen Guangdong 518129 (CN)
(74) Representative: Epping - Hermann - Fischer
(86) International application number: PCT/CN2012/070148
(87) International publication number: WO 2012/097694

(56) References cited:
- EP-A1- 2 120 480
- WO-A1-2008/084949
- CN-A- 101 132 628
- CN-A- 101 483 918
- CN-A- 101 562 894
- US-A1- 2007 201 397
- US-A1- 2010 271 990
- "3rd Generation Partnership Project; Technical Specification Group Radio Access Network; Enhanced uplink; Overall description; Stage 2 (Release 10)", 3GPP STANDARD; 3GPP TS 25.319, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.3.0, 21 December 2010 (2010-12-21) , pages 1-79, XP050462181, [retrieved on 2010-12-21]
- NTT DOCOMO ET AL: "Persistent Scheduling in E-UTRA", 3GPP DRAFT; R1-070861 PERSISTENT SCHEDULING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. St. Louis, USA; 20070206, 6 February 2007 (2007-02-06), XP050104876, [retrieved on 2007-02-06]

## Description

### FIELD OF THE TECHNOLOGY

The present invention relates to the field of communication technology, and in particular, to a method, a user equipment and a communication system for processing a resource request.

### BACKGROUND

In the technology of Long Term Evolution (Long Term Evolution; hereinafter LTE for short), since dynamic allocation is adopted for an air interface resource, a base station (eNodeB) will not allocate a fixed resource for a user equipment (User Equipment; hereinafter UE for short) for a long term.

When a UE has uplink data to be sent, the UE requests a resource for sending the uplink data from an eNodeB, and then the eNodeB allocates the corresponding resource for the UE. Specifically, when the UE has the uplink data to be sent to the eNodeB, it means that the data to be sent has been cached in the buffer of the UE. At this time, the UE sends scheduling request (Scheduling Request) information to the eNodeB, so as to request the eNodeB to begin to allocate the resource required for sending the uplink data for the UE. However, if the UE fails to obtain the resource required for sending the uplink data from the serving eNodeB, the UE will continue to send the Scheduling Request information to the eNodeB. If the UE still fails to obtain the resource required for sending the uplink data from the serving eNodeB after sending the Scheduling Request information for the set number of times, the UE may initiate a random access (Random Access) request to the serving eNodeB, to request the eNodeB to allocate the resource required for sending the uplink data for the UE.

In the prior art, the UE may send Scheduling Request information as well as random access attempts for multiple times to the eNodeB in the process of requesting the eNodeB to allocate the resource required for sending the uplink data for the UE, which will bring about a relatively large time delay, moreover, this time delay may exceed the time delay requirement of the service corresponding to the buffered data in the UE, which leads to a waste of the air interface resource, and may also bring about the overhead of air interface signaling.

US 2010/271990 A1 describes a method for triggering buffer status reports with packet discarding, where a user equipment sends a first buffer status report to an eNodeB to indicate an amount of data in a buffer that is to be sent, and the amount of data in the buffer can change so that the user equipment sends a second buffer status report to indicate the change in the amount of data in the buffer that is to be sent. EP 2 120 480 A1 describes a mobile station which sends a base station a buffer status report explicitly indicating that the amount of a transmission signal in a buffer of the mobile station has become zero.

US 2007/201397 A1 describes a wireless communication method for selecting between transmission of short-version and full-version uplink scheduling requests, where an uplink scheduling request is transmitted by a wireless transmit/receive unit to a NodeB.

The 3GPP document TS 25.319 V10.3.0, entitled "3rd Generation Partnership Project; Technical Specification Group Radio Access Network; Enhanced uplink; Overall description; Stage 2 (Release 10)", describes the overall support of FDD, TDD Enhanced Uplink in UTRA. The 3GPP draft document No. R1-070861 from NTT DoCoMo et al., entitled "Persistent Scheduling in E-UTRA", describes a basic method for persistent scheduling.

### SUMMARY

Embodiments of the present invention provide a method, a user equipment and a communication system for processing a resource request to solve the defects of waste of air interface resource resulting from a UE requesting the air interface resource, and reduce the overhead of air interface signaling caused in the same process in the prior art, which can effectively reduce the waste of the air interface resource.

One aspect of the present invention provides a method for processing a resource request, the method includes:
detecting whether buffered data is still stored in a buffer;
determining, according to a result of the detecting, whether to continue a resource requesting process with a base station; which specifically is: when detecting that the buffered data is still stored in the buffer, determining, according to the result of the detecting, to continue the resource requesting process with the base station; otherwise, when detecting that no buffered data is stored in the buffer, determining, according to the result of the detecting, to terminate the resource requesting process with the base station; where the resource requesting process is used for requesting the base station to allocate the resource for sending the buffered data stored in the buffer;
where the resource requesting process is a scheduling request process or a random access process, the scheduling request process includes multiple times scheduling requests, and the random access process includes multiple times random access attempts;
where the detecting whether the buffered data is still stored in the buffer includes: detecting whether the buffered data is still stored in the buffer each time before sending a scheduling request message, or each time before initiating a random access attempt, or during a random access attempt process.

Another aspect of the present invention provides a user equipment, the user equipment includes:
a detecting module, configured to detect whether buffered data is still stored in a buffer;
a processing module, configured to determine, according to a result of the detecting obtained by the detecting module, whether to continue a resource requesting process with a base station, where the resource requesting process is used for requesting the base station to allocate resource for sending the buffered data stored in the buffer; where the resource requesting process is a scheduling request process or a random access process, the scheduling request process includes multiple times scheduling requests, and the random access process includes multiple times random access attempts;
where the detecting module is specifically configured to detect whether the buffered data is still stored in the buffer each time before a scheduling request message is sent, or each time before a random access attempt is initiated, or during a random access attempt process;
where the detecting module includes a first detecting unit and a second detecting unit; the processing module includes a first processing unit and a second processing unit;
the first detecting unit is configured to detect that the buffered data is still stored in the buffer;
the first processing unit is configured to determine, according to a result of the detecting of the first detecting unit, to continue the resource requesting process with the base station; and
the second detecting unit is configured to detect that no buffered data is stored in the buffer;
the second processing unit is configured to determine, according to a result of the detecting of the second detecting unit, to terminate the resource requesting process with the base station.

Another aspect of the present invention provides a communication system including a user equipment as described above, where the user equipment is communicatedly connected to a base station.

The method for processing a resource request, the user equipment and the communication system according to embodiments of the present invention, detect whether buffered data is stored in the buffer; and determine, according to the result of the detecting, whether to start or to continue the resource requesting process with the base station, the resource requesting process is used for requesting the base station to allocate the resource for sending the buffered data stored in the buffer. By adopting the technical solutions in embodiments of the present invention, it can be effectively avoided that the user equipment requests an air interface resource for the buffered data that has been invalid in the buffer, thereby effectively saving the air interface resource, and saving the overhead of air interface signaling as far as possible.

### BRIEF DESCRIPTION OF THE DRAWINGS

To describe technical solutions in embodiments of the present invention or in the prior art more clearly, the following briefly describes the accompanying drawings needed in the description of embodiments of the present invention or the prior art. Apparently, the accompanying drawings illustrate only some exemplary embodiments of the present invention, and those skilled in the art can derive other drawings from these drawings without creative efforts.
FIG. 1 is a flowchart of a method for processing a resource request according to embodiment 1 of the present invention;
FIG. 2a and FIG. 2b are flowchart of a method for processing a resource request according to embodiment 2 of the present invention;
FIG. 3 is a schematic structural diagram of a UE according to embodiment 3 of the present invention;
FIG. 4 is a schematic structural diagram of a UE according to embodiment 4 of the present invention;
FIG. 5 is a schematic structural diagram of a communication system according to embodiment 5 of the present invention.

### DETAILED DESCRIPTION OF THE EMBODIMENTS

To make the purposes, technical solutions and advantages of embodiments of the present invention much clearer, the technical solutions in embodiments of the present invention are hereinafter described clearly and comprehensively with reference to the accompanying drawings in embodiments of the present invention. Obviously, the embodiments described are only some embodiments of the present invention, and the present invention is not limited to such embodiments. Based on the embodiments of the present invention, all other embodiments obtained by persons of ordinary skill in the art without any creative effort shall fall within the protection scope of the present invention.

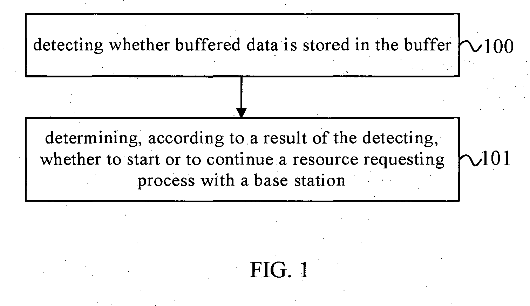

FIG. 1 is a flowchart of a method for processing a resource request according to embodiment 1 of the present invention. The executive body of the method for processing the resource request in this embodiment is a UE. As shown in FIG.1, the method for processing the resource request in this embodiment, specifically may include:
Step 100, detecting whether buffered data is stored in a buffer;
Step 101, determining, according to the result of the detecting, whether to start or to continue a resource requesting process with an eNodeB;

Where the resource requesting process is that the UE requests the eNodeB to allocate the resource for sending the buffered data stored in the buffer of the UE, where the resource requesting process is a scheduling request process or a random access process.

Specifically, in the prior art, when a UE initiates a resource requesting process to an eNodeB, it can send scheduling request messages or random access attempts for multiple times to the eNodeB to request the resource for sending the buffered data stored in the buffer of the UE. When sending the scheduling request message or the random access attempt to the eNodeB for the first time, but still failing to obtain the resource allocated by the eNodeB, the UE needs to frequently send the scheduling request message or the random access attempt to the eNodeB to request the resource for sending the buffered data (i.e. uplink data) stored in the buffer of the UE. However, the frequently sending process results in a relatively large time delay, and this time delay may exceed the time delay requirement of the buffered data stored in the buffer, thereby resulting in that the UE is requesting a resource for the buffered data that has already been discarded from the buffer.

Since the buffered data in the buffer will not be permanently stored in the buffer, the buffered data will be discarded when the caching time corresponding to the buffered data is up or a discarding instruction is received from a higher-level. By adopting the technical solution in the embodiment of the present invention, the UE is utilized to detect whether the buffered data is stored in the buffer, and determine, according to the result of the detecting, whether to start or to continue the resource requesting process with the eNodeB, so as to request the eNodeB to allocate the resource for sending the buffered data. In this way, it can be ensured that the buffered data in the buffer is still within the period of validity (i.e., still stored in the buffer), and then a resource requesting message is sent to the eNodeB requesting to allocate the resource for sending the uplink data; it can be effectively avoided that the UE requests a resource for sending the buffered data that has been discarded from the buffer.

In this embodiment, when the resource requesting process is a scheduling request process, it may include multiple times scheduling requests, and each scheduling request includes one scheduling request message. When the resource requesting process is the random access process, it may include multiple times random access attempts, and each random access attempt process may include 4 messages. Refer to the records in the prior art for detailed information, which will not be repeated here.

In this embodiment, the UE can detect whether the buffered data is stored in the buffer at any time, and determine, according to the result of the detecting, whether to start or to continue the resource requesting process with the eNodeB. The UE may also detect whether the buffered data is stored in the buffer each time before sending the scheduling request message, or each time before initiating the random access attempt, or during a random access attempt process; and determine, according to the result of the detecting, whether to start or to continue the resource requesting process with the eNodeB.

In the method for processing the resource request according to this embodiment, the UE detects whether the buffered data is stored in the buffer; and determines, according to the result of the detecting, whether to start or to continue the resource requesting process with the eNodeB. By adopting the technical solution of this embodiment, it can be effectively avoided that the UE requests an air interface resource for the buffered data that has been invalid in the buffer, thereby effectively saving the air interface resource, and saving the overhead of air interface signaling as far as possible.

Alternatively, step 101 in the above embodiment can be specifically implemented in the following ways: when detecting that the buffered data is stored in the buffer of the UE, the UE starts or continues the resource requesting process with the eNodeB; otherwise, when detecting that no buffered data is stored in the buffer, the UE terminates or does not start the resource requesting process with the eNodeB.

Specifically, the buffered data in the buffer of the UE will be discarded if it is cached too long. Hence, when the buffered data to be sent is generated in the buffer of the UE, a discarding timing corresponding to the buffered data should be set, that is, a lifecycle is set for the buffered data, which, for example, can be implemented through providing a discarding timer. When the discarding timer corresponding to the buffered data is time-out, the buffered data is discarded. Specifically, the discarding timer can be implemented in the packet data convergence protocol (Packet Data Convergence Protocol; hereinafter PDCP for short) layer, after the data being discarded from the PDCP layer, if the corresponding protocol data packet has been transmitted to the radio link control (Radio Link Control; hereinafter RLC for short) layer, the PDCP layer continues to instruct the RLC layer to discard the corresponding protocol data packet, when receiving the discarding instruction from the PDCP layer, the PLC layer discards, according to the discarding instruction, the instructed data packet in the radio link control layer, where the instructed data packet corresponds to the buffered data; furthermore, the RLC layer or the PDCP layer can notify the media access control (Media Access Control; hereinafter MAC for short) layer to discard the corresponding data which is cached in the Message 3 Buffer (Message 3 Buffer).

Specifically, when detecting that buffered data is stored in the buffer, the UE can start the scheduling request process or the random access process with the eNodeB; or continue the scheduling request process or the random access process with the eNodeB. When detecting that no buffered data is stored in the buffer, the UE terminates the scheduling request process or the random access process with the eNodeB; or doesn't need to start the scheduling request process or the random access process with the eNodeB.

It should be noted that, when the resource requesting process is the scheduling request process, if the UE detects that no buffered data is stored in the buffer before a certain scheduling request in the scheduling request process begins, the UE stops sending this scheduling request to the eNodeB, so as to terminate the scheduling request process with the eNodeB.

When the resource requesting process is the random access process, if the UE detects that no buffered data is stored in the buffer before a certain random access attempt in the random access process or during a certain random access attempt, the UE terminates this random access attempt or does not need to start this random access attempt, so as to terminate the random access process with the eNodeB.

For example, when the UE detects that no buffered data is stored in the buffer during a certain random access attempt in the random access process of the UE, the UE terminates this random access attempt or does not need to start this random access attempt, so as to terminate the random access process, which may include:
(1) when the UE detects that no buffered data is stored in the buffer before sending a pilot signal to the eNodeB, the UE stops sending the pilot signal to the eNodeB and stops this random access attempt, so as to terminate the random access process with the eNodeB;
(2) or when the UE detects that no buffered data is stored in the buffer before receiving a random access response message sent by the eNodeB, the UE does not process the random access response message returned from the eNodeB, and stops this random access attempt, so as to terminate the random access process with the eNodeB;
(3) or when the UE detects that no buffered data is stored in the buffer before sending a message 3 to the eNodeB, the UE stops sending the message 3 to the eNodeB, and stops this random access attempt, so as to terminate the random access process with the eNodeB;
(4) or when the UE detects that no buffered data is stored in the buffer before receiving an allocating resource message sent by the eNodeB, the UE does not process the allocating resource message sent by the eNodeB, and stops this random access attempt, so as to terminate the random access process with the eNodeB.

It should be noted that, in the above embodiments, after the UE starts or continues the random access process with the eNodeB, the eNodeB may also receive the request from the UE, at this time the eNodeB will feed back a response message of receiving the data successfully to the UE.

In the prior art, when a UE sends a random access request to an eNodeB, specifically, the RLC layer at the side of the UE receives the data of the PDCP layer of the upper layer, the MAC layer may find that buffered data is stored in the buffer through detecting, for the resource requested for sending the buffered data in the buffer, the MAC layer initiates a random access attempt, at first the MAC layer sends message 1 (Msg1) to the eNodeB in the random access attempt process, the eNodeB feeds back message 2 after receiving. Then the MAC layer sends message 3 (Msg3) to the eNodeB, and a part of buffered data can be carried in the Msg3. Correspondingly, the eNodeB will feed back a response message of receiving the data successfully (ACK response message, which can also be referred to as message 4) to the UE after receiving. However, when the RLC layer needs to determine whether the eNodeB receives the Msg 3, it needs to send a request message through the RLC layer to the RLC layer of the eNodeB to request the eNodeB to feed back the receiving status such as whether the Msg 3 is successfully received, and then wait for the RLC layer to receive the message fed back from the eNodeB. Such a process causes a relatively large time delay when the UE determines whether the data is successfully sent in the random access process.

In embodiments of the present invention, it can be set that the MAC layer of the UE determines, according to the response message of the eNodeB, that the random access process is successful, specifically, the MAC layer of the UE determines, according to the response message of the eNodeB received by the physical layer of the UE, that the random access process is successful, and further determines that the data sent by the UE in the random access process is successfully received by the eNodeB. Further, the MAC layer reports the acknowledge response message of the eNodeB having received the data successfully to the RLC layer, rather than sending a receiving request by the RLC layer, and waiting for the status report fed back from the RLC layer at the base station side in the prior art. In this way, the time delay in determining, by the RLC layer at the UE side, that the data is successfully received by the base station is reduced, so as to make the RLC layer to release the occupied buffer corresponding to the data packet as soon as possible, and the RLC layer can further confirm to the PDCP layer, thus the PDCP layer releases the occupied buffer of the corresponding data packets, which reduces the time of data packets occupying the buffer of the terminal, and the buffer resource of the UE is released in time.

It should be noted that, the eNodeB feeds back the response message of successfully receiving the data to the UE, correspondingly, at first the bottom layer of the UE receives the response message of the eNodeB receiving the data successfully, then the bottom layer of the UE feeds back the response message of the eNodeB receiving the data successfully to the upper layer, for example, the MAC layer of the UE feeds back the response message to the RLC layer, where the response message is of the data sent in the access process such as the data in the buffer of the Msg3 having been successfully received by the eNodeB, where the specific manners of feedback can be, but not limited to, the followings:
a. directly indicating that the data frame is successfully received by the eNodeB;
b. indicating that the random access process is successful, and the upper layer further determining that the data sent in this process is successfully received by the eNodeB.

By adopting the technical solution of the above embodiment, the feedback time delay in the resource requesting process can be reduced, which can avoid the UE requesting an air interface resource for the data that has been invalid in the buffer in the following steps, thereby effectively saving the air interface resource, and saving the overhead of air interface signaling as far as possible.

It should be noted that, the resource requesting process sent by the UE to the eNodeB in embodiments of the present invention can be a scheduling request or a random access process message. Where the random access process can be either a random access attempt initiated in a competitive manner or a random access attempt initiated in a non-competitive manner. In addition, at least one message is included during the scheduling request process or the random access process implementing one scheduling request or one random access. Please refer to the prior art for detailed information, which will not be repeated here.

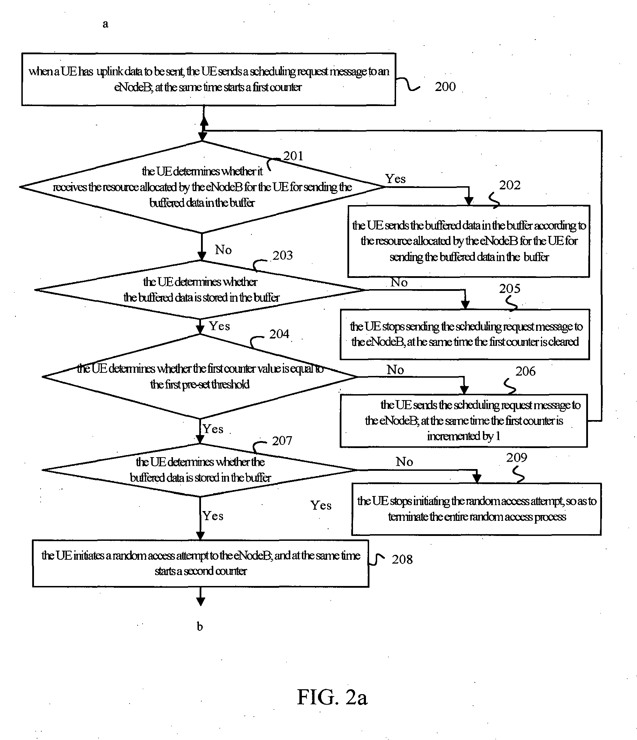

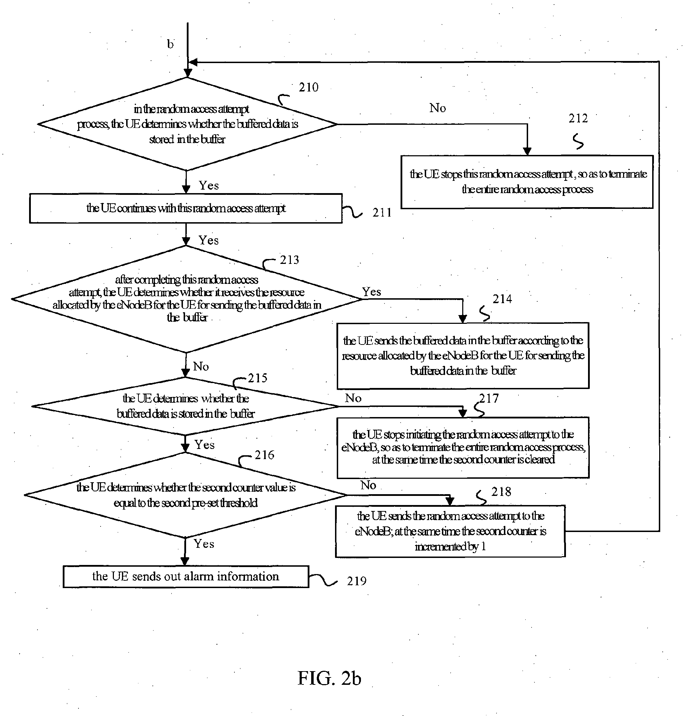

FIG. 2 is a flowchart of a method for processing a resource request according to embodiment 2 of the present invention. As shown in FIG.2, the method for processing the resource request in this embodiment, specifically may include:
Step 200, a UE sends a scheduling request message to an eNodeB when uplink data to be sent is generated in the UE; at the same time starts a first counter;

Specifically, this step occurs when the uplink data to be sent to the eNodeB is generated in the buffer of the UE, however the UE finds that currently there is no resource for sending the uplink data to the eNodeB, then the UE sends the scheduling request message to the eNodeB to request the eNodeB to allocate the resource for sending the uplink data in the buffer of the UE. Since sending the scheduling request message at this time is first time of sending the scheduling request message, and the buffered data in the buffer of the UE is just generated, the UE does not need to detect whether the buffered data is stored in the buffer (i.e., uplink data) at this time. Corresponding to the first counter, a first pre-set threshold is set correspondingly, the first pre-set threshold is equal to an allowed maximum number of times of sending the scheduling request by the UE to the eNodeB, which can be configured by the eNodeB to a terminal. This is the first time of sending a scheduling request, the first counter value can be equal to 1, and the first counter is configured to count the number of times of sending the scheduling request.
Step 201, the UE determines whether it receives the resource allocated by the eNodeB for the UE for sending the buffered data in the buffer; performing step 202 when it is determined that the resource is received; otherwise performing step 203 when the UE determines that it does not receive the resource allocated by the eNodeB for the UE for sending the buffered data in the buffer;
Step 202, the UE sends the buffered data in the buffer according to the resource allocated by the eNodeB for the UE for sending the buffered data in the buffer.
Step 203, the UE determines whether the buffered data is stored in the buffer, performing step 204 when the buffered data is stored, otherwise performing step 205 when no buffered data to be sent is stored in the buffer;
Step 204, the UE determines whether the first counter value is equal to the first pre-set threshold; in this embodiment, there are only two kinds of relationship between the first counter value and the first pre-set threshold, that is, equal to and less than. When the UE determines that the first counter value is not equal to the first preset threshold, that is, it can only be less than the first pre-set threshold, performing step 206, otherwise, when the UE determines that the first counter value is equal to the first preset threshold, performing step 207;
Step 205, the UE stops sending the scheduling request message to the eNodeB, at the same time the first counter is cleared;
Step 206, the UE sends the scheduling request message to the eNodeB; at the same time the first counter is incremented by 1; performing step 201.
Step 207, the UE determines whether the buffered data is stored in the buffer, optionally, continuing to perform step 208 when the buffered data is stored, otherwise, performing step 209 when no buffered data to be sent is stored in the buffer;
Step 208, the UE initiates a random access attempt to the eNodeB; and at the same time starts a second counter; performing step 210; specifically, corresponding to the second counter, a second pre-set threshold is set correspondingly, the second pre-set threshold is equal to an allowed maximum number of times of initiating the random access attempt by the UE to the eNodeB, specifically which can be obtained upon practical experience. This is the first time of sending a scheduling request, and the second counter value is equal to 1, the second counter is configured to count the number of times of initiating the random access attempt.
Step 209, the UE stops initiating the random access attempt, so as to terminate the entire random access process;
Step 210, the UE determines whether the buffered data is stored in the buffer in the random access attempt process, performing step 211 when the buffered data is stored, otherwise, performing step 212 when no buffered data is stored in the buffer;
Step 211, the UE continues with this random access attempt; performing step 213;
Step 212, the UE stops this random access attempt, so as to terminate the entire random access process;
Step 213, after completing this random access attempt, the UE determines whether it receives the resource allocated by the eNodeB for the UE for sending the buffered data in the buffer, performing step 214 when it is determined that the resource is received; otherwise, performing step 215 when the UE determines that it does not receive the resource allocated by the eNodeB for the UE for sending the buffered data in the buffer;
Step 214, the UE sends the buffered data in the buffer according to the resource allocated by the eNodeB for the UE for sending the buffered data in the buffer.
Step 215, the UE determines that whether the buffered data is still stored in the buffer, performing step 216 when the buffered data is stored, otherwise, performing step 217 when no buffered data is stored in the buffer;

This determination is carried out between two random access attempts.
Step 216, the UE determines whether the second counter value is equal to the second pre-set threshold; in this embodiment, there are only two kinds of relationship between the second counter value and the second pre-set threshold, that is, equal to and less than. When the UE determines that the second counter value is not equal to the second pre-set threshold, that is, it can only be less than the second pre-set threshold; performing step 218, otherwise, performing step 219 when the UE determines that the second counter value is equal to the second pre-set threshold;
Step 217, the UE stops initiating the random access attempt to the eNodeB, so as to terminate the entire random access process, at the same time the second counter is cleared;
Step 218, the UE starts the random access attempt to the eNodeB; at the same time the second counter is incremented by 1; performing step 210;
Step 219, the UE sends out alarm information.

Sending out the alarm information at this time by the EU can prompt the staff to check the possible reasons for the problems.

It should be noted that, the above embodiments take the resource requesting process which includes the scheduling request process and the random access process as an example. In practical applications, the resource requesting process can just include the scheduling request process, that is, the resource requesting process is terminated in the scheduling request process as described in the above embodiments. The resource requesting process can also just include the random access process, for example, when the UE generates the uplink data to be sent, but the UE detects and finds that the eNodeB does not allocate the resource for the UE for sending the scheduling request, steps 207-219 of this embodiment can be directly implemented, refer to the records of the above embodiment for detailed description, which will not be repeated here.

The method for processing the resource request according to this embodiment detects whether the buffered data is stored in the buffer; and determines, according to the result of the detecting, whether to start or to continue the resource requesting process with the base station. By adopting the technical solution of this embodiment, it can be effectively avoided that the UE requests an air interface resource for the buffered data that has been invalid in the buffer, thereby effectively saving the air interface resource, and saving the overhead of air interface signaling as far as possible.

Persons skilled in the art can understand that: all or part of the steps in the above method embodiments can be implemented by hardware related to program instructions, the aforementioned program may be stored in a computer readable storage medium, when the program is executed, the steps including the above method embodiments are implemented; the storage medium includes various media able to store program codes, such as ROM, RAM, diskette or compact disk, etc.

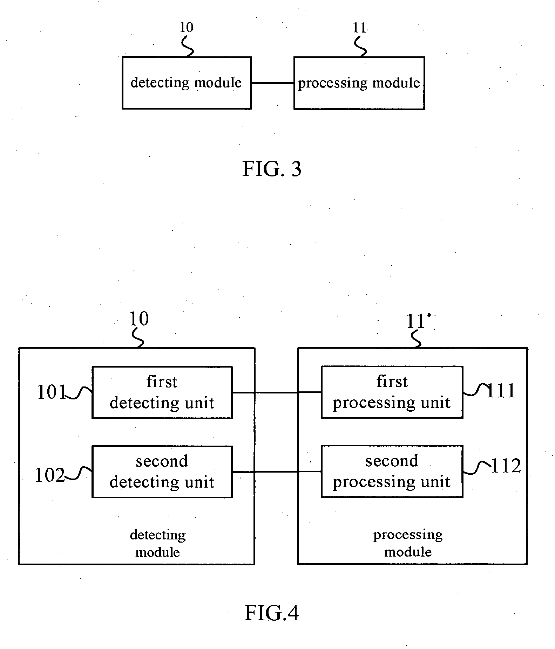

FIG. 3 is a schematic structural diagram of a UE according to embodiment 3 of the present invention. As shown in Figure 3, the UE according to this embodiment specifically may include a detecting module 10 and a processing module 11.

The detecting module 10 in the UE according to this embodiment is configured to detect whether buffered data is stored in the buffer; the processing module 11 is coupled to the detecting module 10, the processing module 11 is configured to determine, according to the result of the detecting obtained by the detecting module 10, whether to start or to continue a resource requesting process with an eNodeB, the resource requesting process is used for requesting the eNodeB to allocate the resource for sending the buffered data stored in the buffer. The resource requesting process is a scheduling request process and a random access process.

The resource requesting process implemented through adopting the detecting module 10 and the processing module 11 by the UE according to this embodiment is the same as the process implemented in the relevant method embodiments above, refer to the records of the relevant method embodiments above for detailed description, which will not be repeated here.

The UE according to this embodiment achieves the detection of whether the buffered data is stored in the buffer through the above modules; and determines, according to the result of the detecting, whether to start or to continue the resource requesting process with the eNodeB. By adopting the technical solution of this embodiment, it can be effectively avoided that the UE requests an air interface resource for the buffered data that has been invalid in the buffer, thereby effectively saving the air interface resource, and saving the overhead of air interface signaling as far as possible.

FIG. 4 is a schematic structural diagram of a UE according to embodiment 4 of the present invention. As shown in Figure 4, based on the above embodiment as shown in Figure 3, the detecting module 10 according to this embodiment can further include: a first detecting unit 101 or a second detecting unit 102. The processing module 11 can further include: a first processing unit 111 or a second processing unit 112.

Where the first detecting unit 101 is configured to detect and determine that buffered data is stored in the buffer of the UE; the first processing unit 111 is coupled with the first detecting unit 101, the first processing unit 111 is configured to determine, according to the result of the detecting of the first detecting unit 101, to start or to continue the resource requesting process with the eNodeB. Or

The second detecting unit 102 is configured to detect and determine that no buffered data is stored in the buffer of the UE. The second processing unit 112 is coupled with the second detecting unit 102, the second processing unit 112 is configured to determine, according to the result of the detecting of the second detecting unit 102, to terminate or not to start the resource requesting process with the eNodeB.

Where, when the resource requesting process is a scheduling request process, the second processing unit 112 is specifically configured to, according to the result of the detecting of the second detecting unit 102 (i.e. no buffered data is stored in the buffer), not send a scheduling request to the eNodeB, so as to terminate or not to start the scheduling request process with the eNodeB.

When the resource requesting process is a random access process, the second processing unit 112 is specifically configured, according to the result of the detecting of the second detecting unit 102 (i.e. no buffered data is stored in the buffer), to terminate or not to start the random access process with the eNodeB.

Specifically, the second processing unit 112 is specifically configured to, when the resource requesting process is the random access process, and the second detecting unit 102 detects that no buffered data is stored in the buffer before sending a pilot signal to the eNodeB, stop sending the pilot signal to the eNodeB, so as to terminate the random access process with the eNodeB.

Or the second processing unit 112 is specifically configured to, when the resource requesting process is the random access process, and the second detecting unit 102 detects that no buffered data is stored in the buffer before receiving an random access response message sent by the eNodeB, not process the random access response message returned from the eNodeB, so as to terminate the random access process with the eNodeB.

Or the second processing unit 112 is specifically configured to, when the resource requesting process is the random access process, and the second detecting unit 102 detects that no buffered data is stored in the buffer before sending message 3 to the eNodeB, stop sending the message 3 to the eNodeB, so as to terminate the random access process with the eNodeB.

Or the second processing unit 112 is specifically configured to, when the resource requesting process is the random access process, and the second detecting unit 102 detects that no buffered data is stored in the buffer before receiving an allocating resource message sent by the eNodeB, not process the allocating resource message sent by the eNodeB, so as to terminate the random access process with the eNodeB.

It should be noted that, the first processing unit 111 according to the above embodiment is configured to determine, according to the result of the detecting of the first detecting unit 101, to start or to continue the resource requesting process with the eNodeB, thereafter, the MAC layer of the UE determines, according to the response message of the eNodeB, that the random access process is successful; in addition, the MAC layer of the UE sends to the RLC layer of the UE a message that the eNodeB successfully receives the data in the random access process.

The resource requesting process implemented through adopting the above modules and units by the UE according to this embodiment is the same as the process implemented in the relevant method embodiments above, refer to the records of the relevant method embodiments above for detailed description, which will not be repeated here.

The UE according to this embodiment achieves the detection of whether the buffered data is stored in the buffer through adopting the above modules and units; and determines, according to the result of the detecting, whether to start or to continue the resource requesting process with the base station. By adopting the technical solution of this embodiment, it can be effectively avoided that the UE requests an air interface resource for the buffered data that has been invalid in the buffer, thereby effectively saving the air interface resource, and saving the overhead of air interface signaling as far as possible.

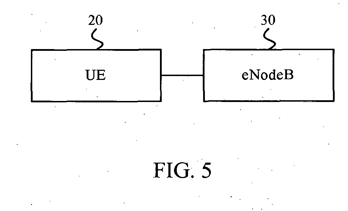

FIG. 5 is a schematic structural diagram of a communication system according to embodiment 5 of the present invention, as shown in Figure 5, the communication system of this embodiment includes a UE 20, which is communicatedly connected with an eNodeB 30.

Where the UE 20 is configured to detect whether buffered data is stored in the buffer; and determine, according to the result of the detecting, whether to start or to continue a resource requesting process with the eNodeB 30; the resource requesting process is that the UE 20 requests the eNodeB 30 to allocate the resource for sending the buffered data stored in the buffer; where the resource requesting process is a scheduling request process or a random access process. The eNodeB 30 according to this embodiment is configured to, during the UE 20 initiating a resource request, allocate the resource for the UE 20 sending the buffered data stored in the buffer, after establishing a connection with the UE 20.

The UE 20 according to this embodiment may adopt the UE as above described in embodiment 3 or embodiment 4.

The resource requesting process implemented through adopting the above UE 20 and eNodeB 30 by the communication system according to this embodiment is the same as the implementing scheme of the relevant method embodiments above, refer to the records of the relevant method embodiments above for detailed description, which will not be repeated here.

The communication system according to this embodiment, by adopting the above UE and eNodeB, achieves that the UE determines, according to the result of the detecting, whether to start or to continue the resource requesting process with the eNodeB. After the UE 20 starts or continues the resource scheduling request process with the eNodeB 30, the eNodeB allocates the desired resource for the UE in the resource requesting process started by the UE20, where the resource is used for sending the buffered data stored in the buffer. By adopting the technical solution of this embodiment, it can be effectively avoided that the UE requests an air interface resource for the buffered data that has been invalid in the buffer, thereby effectively saving the air interface resource, and saving the overhead of air interface signaling as far as possible.

The device embodiments as described above is only exemplary, where the units described as a separate part may be or be not physically separated, and the components showed as a unit may be or not be a physical unit, which may be located in one place, or may be distributed in at least two network units. The technical solution of this embodiment can be achieved by selecting all or part of the modules according to actual needs, which can be understood and implemented by those skilled in the art without any creative work.

## Claims

1. A method for processing a resource request, comprising:
detecting (100) whether buffered data is still stored in a buffer;
determining (101), according to a result of the detecting, whether to continue a resource requesting process with a base station, which specifically is: when detecting that the buffered data is still stored in the buffer, determining, according to the result of the detecting, to continue the resource requesting process with the base station; otherwise, when detecting that no buffered data is stored in the buffer, determining, according to the result of the detecting, to terminate the resource requesting process with the base station; wherein the resource requesting process is used for requesting the base station to allocate resource for sending the buffered data stored in the buffer;
wherein the resource requesting process is a scheduling request process or a random access process, the scheduling request process comprises multiple times scheduling requests, and the random access process comprises multiple times random access attempts;
wherein the detecting (100) whether the buffered data is still stored in the buffer comprises: detecting whether the buffered data is still stored in the buffer each time before sending a scheduling request message, or each time before initiating a random access attempt, or during a random access attempt process.

2. The method according to claim 1, wherein the resource requesting process is the scheduling request process,
the determining, according to the result of the detecting, to terminate the resource requesting process with the base station, comprises:
detecting that no buffered data is stored in the buffer before sending a scheduling request to the base station, and not sending the scheduling request to the base station, so as to terminate the scheduling request process with the base station.

3. The method according to claim 1, wherein the resource requesting process is the random access process,
the to terminate the resource requesting process with the base station, comprises:
to detect that no buffered data is stored in the buffer before sending a pilot signal to the base station, and to stop sending the pilot signal to the base station, so as to terminate the random access process with the base station;
or to detect that no buffered data is stored in the buffer before receiving an random access response message sent by the base station, and not to process the random access response message returned from the base station, so as to terminate the random access process with the base station;
or to detect that no buffered data is stored in the buffer before sending a message 3 to the base station, and to stop sending the message 3 to the base station, so as to terminate the random access process with the base station;
or to detect that no buffered data is stored in the buffer before receiving an allocating resource message sent by the base station, and not to process the allocating resource message sent by the base station, so as to terminate the random access process with the base station.

4. The method according to claim 1, wherein the resource requesting process is the random access process,
after determining, according to the result of the detecting, to continue the resource requesting process with the base station, the method further comprises:
determining, by a media access control layer of a user equipment according to a response message of the base station, that the random access process is successful;
sending, by the media access control layer, to a radio link control layer of the user equipment a message that the base station successfully receives the data in the random access process.

5. A user equipment, comprising:
a detecting module (10), configured to detect whether buffered data is still stored in a buffer;
a processing module (11), configured to determine, according to a result of the detecting obtained by the detecting module (10), whether to continue a resource requesting process with a base station, wherein the resource requesting process is used for requesting the base station to allocate resource for sending the buffered data stored in the buffer; wherein the resource requesting process is a scheduling request process or a random access process, the scheduling request process comprises multiple times scheduling requests, and the random access process comprises multiple times random access attempts;
wherein the detecting module (10) is specifically configured to detect whether the buffered data is still stored in the buffer each time before a scheduling request message is sent, or each time before a random access attempt is initiated, or during a random access attempt process;
wherein the detecting module (10) comprises a first detecting unit (101) and a second detecting unit (102); the processing module (11) comprises a first processing unit (111) and a second processing unit (112);
the first detecting unit (101) is configured to detect that the buffered data is still stored in the buffer;
the first processing unit (111) is configured to determine, according to a result of the detecting of the first detecting unit (101), to continue the resource requesting process with the base station; and
the second detecting unit (102) is configured to detect that no buffered data is stored in the buffer;
the second processing unit (112) is configured to determine, according to a result of the detecting of the second detecting unit (102), to terminate the resource requesting process with the base station.

6. The user equipment according to claim 5, wherein:
the second processing unit (112) is specifically configured to, when the resource requesting process is the scheduling request process, according to that the second detecting unit (102) detects that no buffered data is stored in the buffer, not send a scheduling request to the base station, so as to terminate the scheduling request process with the base station.

7. The user equipment according to claim 5, wherein,
the second processing unit (112) is specifically configured to, when the resource requesting process is the random access process, and the second detecting unit (102) detects that no buffered data is stored in the buffer before sending a pilot signal to the base station, stop sending the pilot signal to the base station, so as to terminate the random access process with the base station; or
specifically configured to, when the resource requesting process is the random access process, and the second detecting unit (102) detects that no buffered data is stored in the buffer before receiving an random access response message sent by the base station, not process the random access response message returned from the base station, so as to terminate the random access process with the base station; or
specifically configured to, when the resource requesting process is the random access process, and the second detecting unit (102) detects that no buffered data is stored in the buffer before sending a massage 3 to the base station, stop sending the message 3 to the base station, so as to terminate the random access process with the base station; or
specifically configured to, when the resource requesting process is the random access process, and the second detecting unit (102) detects that no buffered data is stored in the buffer before receiving an allocating resource message sent by the base station, not process the allocating resource message sent by the base station, so as to terminate the random access process with the base station.

8. A communication system, comprising a user equipment (20) according to any of claims 5-7, wherein the user equipment (20) is communicatedly connected to a base station (30).

## Patentansprüche

1. Verfahren zum Bearbeiten einer Betriebsmittelanforderung, umfassend:
Detektieren (100), ob zwischengespeicherte Daten noch in einem Zwischenspeicher gespeichert sind;
Bestimmen (101), gemäß einem Ergebnis des Detektierens, ob ein Betriebsmittelanforderungsprozess mit einer Basisstation fortzusetzen ist, der spezifisch ist: wenn detektiert wird, dass die zwischengespeicherten Daten noch in dem Zwischenspeicher gespeichert sind, Bestimmen, gemäß dem Ergebnis des Detektierens, den Betriebsmittelanforderungsprozess mit der Basisstation fortzusetzen; anderenfalls, wenn detektiert wird, dass keine zwischengespeicherten Daten in dem Zwischenspeicher gespeichert sind, Bestimmen, gemäß dem Ergebnis des Detektierens, den Betriebsmittelanforderungsprozess mit der Basisstation zu beenden; wobei der Betriebsmittelanforderungsprozess verwendet wird, um anzufordern, dass die Basisstation Betriebsmittel zum Senden der zwischengespeicherten Daten, die in dem Zwischenspeicher gespeichert sind, zuteilt;
wobei der Betriebsmittelanforderungsprozess ein Zeitsteuerungsanforderungsprozess oder ein Direktzugriffsprozess ist, der Zeitsteuerungsanforderungsprozess mehrmalige Zeitsteuerungsanforderungen umfasst und der Direktzugriffsprozess mehrmalige Direktzugriffsversuche umfasst;
wobei das Detektieren (100), ob die zwischengespeicherten Daten noch in dem Zwischenspeicher gespeichert sind, umfasst: Detektieren, ob die zwischengespeicherten Daten noch in dem Zwischenspeicher gespeichert sind, jedes Mal vor dem Senden einer Zeitsteuerungsanforderungsnachricht oder jedes Mal vor dem Einleiten eines Direktzugriffsversuchs oder während eines Direktzugriffsversuchsprozesses.

2. Verfahren nach Anspruch 1, wobei der Betriebsmittelanforderungsprozess der Zeitsteuerungsanforderungsprozess ist,
das Bestimmen, gemäß dem Ergebnis des Detektierens, zum Beenden des Betriebsmittelanforderungsprozesses mit der Basisstation umfasst:
Detektieren, dass keine zwischengespeicherten Daten in dem Zwischenspeicher gespeichert sind, vor dem Senden einer Zeitsteuerungsanforderung an die Basisstation, und kein Senden der Zeitsteuerungsanforderung an die Basisstation, um den Zeitsteuerungsanforderungsprozess mit der Basisstation zu beenden.

3. Verfahren nach Anspruch 1, wobei der Betriebsmittelanforderungsprozess der Direktzugriffsprozess ist,
das Beenden des Betriebsmittelanforderungsprozesses mit der Basisstation umfasst:
Detektieren, dass keine zwischengespeicherten Daten in dem Zwischenspeicher gespeichert sind, vor dem Senden eines Pilotsignals an die Basisstation, und das Senden des Pilotsignals an die Basisstation anzuhalten, um den Direktzugriffsprozess mit der Basisstation zu beenden;
oder Detektieren, dass keine zwischengespeicherten Daten in dem Zwischenspeicher gespeichert sind, vor dem Empfangen einer von der Basisstation gesandten Direktzugriff-Antwortnachricht, und kein Verarbeiten der von der Basisstation zurückgesandten Direktzugriff-Antwortnachricht, um den Direktzugriffsprozess mit der Basisstation zu beenden;
oder Detektieren, dass keine zwischengespeicherten Daten in dem Zwischenspeicher gespeichert sind, vor dem Senden einer Nachricht 3 an die Basisstation, und das Senden der Nachricht 3 an die Basisstation anzuhalten, um den Direktzugriffsprozess mit der Basisstation zu beenden;
oder Detektieren, dass keine zwischengespeicherten Daten in dem Zwischenspeicher gespeichert sind, vor dem Empfangen einer von der Basisstation gesandten Betriebsmittelzuteilungsnachricht, und kein Verarbeiten der von der Basisstation gesandten Betriebsmittelzuteilungsnachricht, um den Direktzugriffsprozess mit der Basisstation zu beenden.

4. Verfahren nach Anspruch 1, wobei der Betriebsmittelanforderungsprozess der Direktzugriffsprozess ist,
wobei nach dem Bestimmen, gemäß dem Ergebnis des Detektierens, den Betriebsmittelanforderungsprozess mit der Basisstation fortzusetzen, das Verfahren ferner umfasst:
Bestimmen, durch eine Medienzugriffssteuerschicht einer Benutzerausrüstung gemäß einer Antwortnachricht der Basisstation, dass der Direktzugriffsprozess erfolgreich ist;
Senden, durch die Medienzugriffssteuerschicht, einer Nachricht an eine Funkverknüpfung-Steuerschicht der Benutzerausrüstung, dass die Basisstation die Daten in dem Direktzugriffsprozess erfolgreich empfängt.

5. Benutzerausrüstung, umfassend:
ein Detektionsmodul (10), konfiguriert zum Detektieren, ob zwischengespeicherte Daten noch in einem Zwischenspeicher gespeichert sind;
ein Verarbeitungsmodul (11), konfiguriert zum Bestimmen, gemäß einem Ergebnis des Detektierens, erhalten von dem Detektionsmodul (10), ob ein Betriebsmittelanforderungsprozess mit einer Basisstation fortzusetzen ist, wobei der Betriebsmittelanforderungsprozess verwendet wird, um anzufordern, dass die Basisstation Betriebsmittel zum Senden der zwischengespeicherten Daten, die in dem Zwischenspeicher gespeichert sind, zuteilt; wobei der Betriebsmittelanforderungsprozess ein Zeitsteuerungsanforderungsprozess oder ein Direktzugriffsprozess ist, der Zeitsteuerungsanforderungsprozess mehrmalige Zeitsteuerungsanforderungen umfasst und der Direktzugriffsprozess mehrmalige Direktzugriffsversuche umfasst;
wobei das Detektionsmodul (10) spezifisch konfiguriert ist zum Detektieren, ob die zwischengespeicherten Daten noch in dem Zwischenspeicher gespeichert sind, jedes Mal vor dem Senden einer Zeitsteuerungsanforderungsnachricht oder jedes Mal vor dem Einleiten eines Direktzugriffsversuchs oder während eines Direktzugriffsversuchsprozesses;
wobei das Detektionsmodul (10) eine erste Detektionseinheit (101) und eine zweite Detektionseinheit (102) umfasst; das Verarbeitungsmodul (11) eine erste Verarbeitungseinheit (111) und eine zweite Verarbeitungseinheit (112) umfasst;
die erste Detektionseinheit (101) konfiguriert ist zum Detektieren, dass die zwischengespeicherten Daten noch in dem Zwischenspeicher gespeichert sind;
die erste Verarbeitungseinheit (111) konfiguriert ist zum Bestimmen, gemäß einem Ergebnis des Detektierens der ersten Detektionseinheit (101), den Betriebsmittelanforderungsprozess mit der Basisstation fortzusetzen; und
die zweite Detektionseinheit (102) konfiguriert ist zum Detektieren, dass keine zwischengespeicherten Daten in dem Zwischenspeicher gespeichert sind;
die zweite Verarbeitungseinheit (112) konfiguriert ist zum Bestimmen, gemäß einem Ergebnis des Detektierens der zweiten Detektionseinheit (102), den Betriebsmittelanforderungsprozess mit der Basisstation zu beenden.

6. Benutzerausrüstung nach Anspruch 5, wobei:
die zweite Verarbeitungseinheit (112) spezifisch konfiguriert ist, wenn der Betriebsmittelanforderungsprozess der Zeitsteuerungsanforderungsprozess ist, gemäß der Detektion durch die zweite Detektionseinheit (102), dass keine zwischengespeicherten Daten in dem Zwischenspeicher gespeichert sind, keine Zeitsteuerungsanforderung an die Basisstation zu senden, um den Zeitsteuerungsanforderungsprozess mit der Basisstation zu beenden.

7. Benutzerausrüstung nach Anspruch 5, wobei
die zweite Verarbeitungseinheit (112) spezifisch konfiguriert ist, wenn der Betriebsmittelanforderungsprozess der Direktzugriffsprozess ist und die zweite Detektionseinheit (102) detektiert, dass keine zwischengespeicherten Daten in dem Zwischenspeicher gespeichert sind, vor dem Senden eines Pilotsignals an die Basisstation, das Senden des Pilotsignals an die Basisstation anzuhalten, um den Direktzugriffsprozess mit der Basisstation zu beenden; oder
spezifisch konfiguriert ist, wenn der Betriebsmittelanforderungsprozess der Direktzugriffsprozess ist und die zweite Detektionseinheit (102) detektiert, dass keine zwischengespeicherten Daten in dem Zwischenspeicher gespeichert sind, vor dem Empfangen einer von der Basisstation gesandten Direktzugriff-Antwortnachricht, die von der Basisstation zurückgesandte Direktzugriff-Antwortnachricht nicht zu verarbeiten, um den Direktzugriffsprozess mit der Basisstation zu beenden; oder
spezifisch konfiguriert ist, wenn der Betriebsmittelanforderungsprozess der Direktzugriffsprozess ist und die zweite Detektionseinheit (102) detektiert, dass keine zwischengespeicherten Daten in dem Zwischenspeicher gespeichert sind, vor dem Senden einer Nachricht 3 an die Basisstation, das Senden der Nachricht 3 an die Basisstation anzuhalten, um den Direktzugriffsprozess mit der Basisstation zu beenden;oder
spezifisch konfiguriert ist, wenn der Betriebsmittelanforderungsprozess der Direktzugriffsprozess ist und die zweite Detektionseinheit (102) detektiert, dass keine zwischengespeicherten Daten in dem Zwischenspeicher gespeichert sind, vor dem Empfangen einer von der Basisstation gesandten Betriebsmittelzuteilungsnachricht, die von der Basisstation gesandte Betriebsmittelzuteilungsnachricht nicht zu verarbeiten, um den Direktzugriffsprozess mit der Basisstation zu beenden.

8. Kommunikationssystem, umfassend eine Benutzerausrüstung (20) nach einem der Ansprüche 5-7, wobei die Benutzerausrüstung (20) mit einer Basisstation (30) kommunikativ verbunden ist.

## Revendications

1. Procédé de traitement d'une demande de ressource comprenant :
la détection (100) de ce que des données en tampon sont toujours stockées dans une mémoire tampon,
la détermination (101), en fonction du résultat de la détection, de la poursuite d'un processus de demande de ressource avec une station de base, qui est en particulier :
lors de la détection de ce que les données en tampon sont toujours stockées dans la mémoire tampon, la détermination, en fonction du résultat de la détection, de la poursuite du processus de demande de ressource avec la station de base, sinon, en détectant qu'il n'existe pas de données en tampon stockées dans la mémoire tampon, la détermination, en fonction du résultat de la détection, de la fin du processus de demande de ressource avec la station de base, le processus de demande de ressource étant utilisé pour demander à la station de base d'allouer une ressource permettant d'envoyer les données en tampon stockées dans la mémoire tampon,
dans lequel le processus de demande de ressource est un processus de demande par programmation ou un processus d'accès aléatoire, le processus de demande par programmation comprenant des demandes par programmation à de multiples instants et le processus d'accès aléatoire comprenant des tentatives d'accès aléatoire à de multiples instants,
dans lequel la détection (100) de ce que les données en tampon sont toujours stockées dans la mémoire tampon comprend : la détection de ce que les données en tampon sont toujours stockées dans la mémoire tampon chaque instant avant d'envoyer un message de demande par programmation ou chaque instant avant de lancer une tentative d'accès aléatoire, ou pendant un processus de tentative d'accès aléatoire.

2. Procédé selon la revendication 1, dans lequel le processus de demande de ressource est le processus de demande par programmation,
la détermination, en fonction du résultat de la détection, de terminer le processus de demande de ressource avec la station de base, comprenant :
le fait de détecter qu'il n'existe pas de données en tampon stockées dans la mémoire tampon avant d'envoyer une demande de programmation à la station de base et de ne pas envoyer de demande de programmation à la station de base de façon à terminer le processus de demande par programmation avec la station de base.

3. Procédé selon la revendication 1, dans lequel le processus de demande de ressource est le processus d'accès aléatoire,
le fait de terminer le processus de demande de ressource avec la station de base comprenant :
le fait de détecter qu'il n'existe pas de données en tampon stockées dans la mémoire tampon avant d'envoyer un signal pilote à la station de base, et d'arrêter d'envoyer le signal pilote à la station de base de façon à terminer le processus d'accès aléatoire avec la station de base,
ou le fait de détecter qu'il n'existe pas de données en tampon stockées dans la mémoire tampon avant de recevoir un message de réponse à accès aléatoire envoyé par la station de base et de ne pas traiter le message de réponse à accès aléatoire renvoyé par la station de base de façon à terminer le processus d'accès aléatoire avec la station de base,
ou le fait de détecter qu'il existe pas de données en tampon stockées dans la mémoire tampon avant d'envoyer un message 3 à la station de base, et d'arrêter d'envoyer le message 3 à la station de base de façon à terminer le processus d'accès aléatoire avec la station de base,
ou le fait de détecter qu'il existe pas de données en tampon stockées dans la mémoire tampon avant de recevoir un message de ressource d'allocation envoyé par la station de base et de ne pas traiter le message de ressource d'allocation envoyé par la station de base de façon à terminer le processus d'accès aléatoire avec la station de base.

4. Procédé selon la revendication 1, dans lequel le processus de demande de ressource est le processus d'accès aléatoire,
après détermination en fonction du résultat de la détection, la poursuite du processus de demande de ressource avec la station de base, le procédé comprend en outre :
le fait de déterminer, par une couche de commande d'accès multimédia d'un équipement utilisateur en fonction du message de réponse de la station de base, que le processus d'accès aléatoire est réussi,
le fait d'envoyer, par la couche de commande d'accès multimédia, à une couche de commande de liaison radio de l'équipement utilisateur, un message indiquant que la station de base reçoit avec succès les données dans le processus d'accès aléatoire.

5. Équipement utilisateur comprenant :
un module de détection (10) configuré pour détecter si des données en tampon sont toujours stockées dans une mémoire tampon,
un module de traitement (11) configuré pour déterminer, en fonction du résultat de la détection obtenu par le module de détection (10), la poursuite d'un processus de demande de ressource avec une station de base, le processus de demande de ressource étant utilisé pour demander à la station de base d'allouer une ressource destinée à envoyer les données en tampon stockées dans la mémoire tampon, le processus de demande de ressource étant un processus de demande par programmation ou un processus d'accès aléatoire, le processus de demande par programmation comprenant des demandes par programmation à de multiples instants et le processus d'accès aléatoire comprenant des tentatives d'accès aléatoire à de multiples instants,
dans lequel le module de détection (10) est en particulier configuré pour détecter si les données en tampon sont toujours stockées dans la mémoire tampon chaque instant avant d'envoyer un message de demande de programmation ou chaque instant avant de lancer une tentative d'accès aléatoire, ou pendant un processus de tentative d'accès aléatoire,
dans lequel le module de détection (10) comprend une première unité de détection (101) et une seconde unité de détection (102), le module de traitement (11) comprenant une première unité de traitement (111) et une seconde unité de traitement (112),
la première unité de détection (101) est configurée pour détecter que les données en tampon sont toujours stockées dans la mémoire tampon,
la première unité de traitement (111) est configurée pour déterminer, en fonction du résultat de la détection issu de la première unité de détection (101), la poursuite du processus de demande de ressource avec la station de base, et
la seconde unité de détection (102) est configurée pour détecter qu'il n'existe pas de données en tampon stockées dans la mémoire tampon,
la seconde unité de traitement (112) est configurée pour déterminer, en fonction du résultat de la détection issu de la seconde unité de détection (102), la fin du processus de demande de ressource avec la station de base.

6. Équipement utilisateur selon la revendication 5, dans lequel :
la seconde unité de traitement (112) est en particulier configurée pour ne pas envoyer de demande de programmation à la station de base, lorsque le processus de demande de ressource est le processus de demande par programmation, en fonction du fait que la seconde unité de détection (102) détecte qu'il n'existe pas de données en tampon stockées dans la mémoire tampon, de façon à terminer le processus de demande par programmation avec la station de base.

7. Équipement utilisateur selon la revendication 5, dans lequel,
la seconde unité de traitement (112) est en particulier configurée pour arrêter d'envoyer le signal pilote à la station de base, lorsque le processus de demande de ressource est le processus d'accès aléatoire et que la seconde unité de détection (102) détecte qu'il n'existe pas de données en tampon stockées dans la mémoire tampon avant d'envoyer un signal pilote à la station de base, de façon à terminer le processus d'accès aléatoire avec la station de base, ou
elle est en particulier configurée pour ne pas traiter le message de réponse à accès aléatoire renvoyé par la station de base, lorsque le processus de demande de ressource est le processus d'accès aléatoire et que la seconde unité de détection (102) détecte qu'il n'existe pas de données en tampon stockées dans la mémoire tampon avant de recevoir un message de réponse à accès aléatoire envoyé par la station de base, de façon à terminer le processus d'accès aléatoire avec la station de base, ou elle est en particulier configurée pour arrêter d'envoyer le message 3 à la station de base, lorsque le processus de demande de ressource est le processus d'accès aléatoire et que la seconde unité de détection (102) détecte qu'il n'existe pas de données en tampon stockées dans la mémoire tampon avant d'envoyer un message 3 à la station de base, de façon à terminer le processus d'accès aléatoire avec la station de base, ou elle est en particulier configurée pour ne pas traiter le message de ressource d'allocation envoyé par la station de base, lorsque le processus de demande de ressource est le processus d'accès aléatoire et que la seconde unité de détection (102) détecte qu'il n'existe pas de données en tampon stockées dans la mémoire tampon avant de recevoir un message de ressource d'allocation envoyé par la station de base, de façon à terminer le processus d'accès aléatoire avec la station de base.

8. Système de communication comprenant un équipement utilisateur (20) conforme à l'une quelconque des revendications 5 à 7, l'équipement utilisateur (20) étant relié par communication à une station de base (30).
